# EUROPÄISCHE PATENTSCHRIFT

(11) **EP 3 035 461 B1**
(45) Veröffentlichungstag und Bekanntmachung des Hinweises auf die Patenterteilung: **08.04.2020**
(21) Anmeldenummer: 15200028.7
(22) Anmeldetag: 15.12.2015
(51) Int. Cl.: H02G 3/04, H02G 11/00

(54) **KABELFÜHRUNGSVORRICHTUNG SOWIE VERFAHREN ZUR HERSTELLUNG EINER SOLCHEN KABELFÜHRUNGSVORRICHTUNG**
CABLE ROUTING DEVICE AND METHOD FOR PRODUCING SUCH A CABLE ROUTING DEVICE
DISPOSITIF DE GUIDAGE DE CABLE ET PROCEDE DE FABRICATION D'UN TEL DISPOSITIF DE GUIDAGE DE CABLE

(30) Priorität: 17.12.2014 DE 102014226334
(43) Veröffentlichungstag der Anmeldung: 22.06.2016
(73) Patentinhaber: LEONI Kabel GmbH, 90402 Nürnberg (DE)
(72) Erfinder: STADLER, Wolfgang, 91161 Hilpoltstein (DE)
(74) Vertreter: FDST Patentanwälte

(56) Entgegenhaltungen:
- EP-A1- 0 789 167
- EP-A2- 2 722 555
- WO-A1-2011/092991
- FR-A1- 2 871 284
- JP-A- 2009 060 731

## Beschreibung

Die Erfindung betrifft eine Kabelführungsvorrichtung mit den Merkmalen des Oberbegriffs des Anspruchs 1. Die Erfindung betrifft weiterhin ein Verfahren zur Herstellung einer solchen Kabelführungsvorrichtung für zumindest eine Leitung eines bewegten Maschinenteils. Die Kabelführungsvorrichtung ist in zumindest einer definierten Biegerichtung reversibel biegbar und weist hierzu eine flexible und sich in einer Längsrichtung erstreckende Trägerstruktur auf, in die ein Einlegeteil eingebettet ist.

Eine Kabelführungsvorrichtung mit den Merkmalen des Oberbegriffs des Anspruchs 1 ist aus der WO 2011/092991 A1 zu entnehmen. Die darin beschriebene Kabelführungsvorrichtung weist eine im Querschnitt gesehen in etwa H-förmige Trägerstruktur auf, wobei die oberen seitlichen H-Stege nach innen geneigt oder nach innen abknickend ausgebildet sind, so dass sie einen Aufnahmeraum teilweise überdecken. Dieser dient zur Aufnahme von Leitungen. In der Trägerstruktur kann ein Versteifungselement eingebettet sein.

Eine derartige Kabelführungsvorrichtung wird allgemein zum Anschluss eines bewegten Maschinenteils herangezogen, welches während seines Betriebs eine Vielzahl von Bewegungen ausführt. Die Versorgungsleitungen, wie beispielsweise elektrische Leitungen oder Kabel sowie auch andere Leitungen, sind dadurch insbesondere einer hohen Biegebeanspruchung oder auch Reibbeanspruchung ausgesetzt. Zum Schutz der Versorgungsleitung werden hierbei häufig so genannte Schleppketten eingesetzt, in denen derartige Versorgungsleitungen geführt sind. Bei derartigen Schleppketten handelt es sich um Kabelführungsvorrichtungen, welche üblicherweise aus einzelnen Kettengliedern gebildet sind, die miteinander gelenkig verbunden sind. Die Ausbildung derartiger Schleppketten erfordert jedoch einen hohen Montageaufwand infolge der Verbindung der einzelnen Kettenglieder.

Aus der DE 10 2004 025 371 A1 ist eine Kabelführungsvorrichtung zu entnehmen, bei der die einzelnen Leitungen in einer einstückigen Trägerstruktur eingebettet sind. Die Trägerstruktur weist hierbei in Längsrichtung mehrere aneinandergereihte ringförmige Segmente auf, welche über ein Versteifungsband der Trägerstruktur entlang einer Linie aneinandergereiht sind. Die Richtung des Versteifungsbands definiert dabei eine Biegerichtung.

Aus der DE 10 2006 009 521 B3 ist eine weitere Kabelführungsvorrichtung zu entnehmen. Hierin ist unter anderem eine U-förmige Trägerstruktur beschrieben, wobei in dieser druckfeste Stäbe und zugfeste Fasern beabstandet voneinander eingebettet sind. Durch die Wahl der Position der druckfesten sowie zugfesten voneinander beabstandeten Elemente wird eine definierte Biegerichtung eingestellt.

Aus der FR 2 871 284 A1 ist ein Flachbandkabel zu entnehmen, bei dem neben den einzelnen Leitungselementen auch ein Versteifungselement in einen Isolationsmantel mit eingebettet ist.

Darüber hinaus sind Kabelführungsvorrichtungen bekannt, die nach Art von Schleppketten ausgebildet sind und bei denen einzelne Kettenglieder aneinander befestigt sind und einen Führungsraum für das Kabel definieren. Beispiele hierfür sind zu entnehmen aus der EP 2 722 555 A2 der EP 0 789 167 A1 oder der JP 2009 060731 A.

Ausgehend hiervon liegt der Erfindung die Aufgabe zugrunde, eine weitere derartige Kabelführungsvorrichtung anzugeben, welche einfach und kostengünstig herzustellen ist.

Die Aufgabe wird erfindungsgemäß gelöst durch eine Kabelführungsvorrichtung mit den Merkmalen des Anspruchs 1. Die Kabelführungsvorrichtung ist in zumindest einer definierten Biegerichtung reversibel biegbar und weist hierzu eine biegeflexible und sich in einer Längsrichtung erstreckende Trägerstruktur auf, in die ein Einlegeteil eingebettet ist. Das Einlegeteil ist daher fest und stoffschlüssig mit der Trägerstruktur verbunden. Zur Definition der zumindest einen Biegerichtung weist das Einlegeteil nunmehr eine definierte, von einer Kreisform abweichende Querschnittsgeometrie auf. Dieses Einlegeteil bildet daher in gewisser Weise einen Kern der Trägerstruktur und definiert insbesondere durch seine Querschnittsform zumindest eine vorgegebene Biegerichtung der Kabelführungsvorrichtung. Durch diese Maßnahme ist daher lediglich ein einziges Einlegeteil ausreichend und auch nur vorgesehen, um die gewünschte Festlegung der Biegerichtung zu erreichen.

Bei dem Einlegeteil handelt es sich allgemein um ein biegeflexibles Element, welches sich über die gesamte Länge der Kabelführungsvorrichtung erstreckt. Das Einlegeteil besteht dabei beispielsweise aus einem Federstahl oder auch aus einem glasfaser- oder kohlefaserverstärkten Kunststoff mit einer ausreichenden Elastizität. Durch diese Materialelastizität ist das Einlegeteil grundsätzlich biegeflexibel, wobei durch seine Formgebung, also durch die Querschnittskontur, die möglichen Biegerichtungen bestimmt und insbesondere auch begrenzt sind. Das Elastizitätsmodul des Einlegeteils liegt dabei insbesondere in einem Bereich >50kN/mm² und beispielsweise bei maximal etwa 300 kN/mm². Je nach verwendetem Material liegt es bei einem faserverstärkten Kunststoff, insbesondere CFK, im Bereich von 150-230kN/mm², bei der Verwendung eines mit Glasfasern verstärkte Kunststoffes im Bereich etwa von 55-90kN/mm² und bei Stahl bei etwa 190-210 kN/mm².

Bei der Trägerstruktur handelt es sich um eine Polymer-Struktur, insbesondere um einen thermoplastischen Kunststoff, welcher eine ausreichende Biegeelastizität aufweist. Als Material für die Trägerstruktur wird dabei insbesondere ein abriebfestes Polymer, beispielsweise ein Polyurethan, verwendet. Je nach Anwendungs- und Belastungsfall können auch andere Polymere wie PP oder PE eingesetzt werden.

Gemäß einer bevorzugten Ausgestaltung weist dabei das Einlegeteil eine flache Querschnittsgeometrie auf, sodass also eine Breite des Einlegeteils in einer ersten Querrichtung größer ist als eine Höhe des Einlegeteils in einer zweiten Querrichtung. Die Breite beträgt dabei insbesondere ein Vielfaches der Höhe, beispielsweise mehr als das Fünffache. Insgesamt ist das Einlegeteil daher als ein flaches in die Trägerstruktur in Längsrichtung integriertes Band ausgebildet. Durch diese Ausgestaltung ist ein Biegen des Einlegeteils und damit insgesamt auch der Kabelführungsvorrichtung nur um eine Biegeachse parallel zur ersten Querrichtung ermöglicht. Dadurch werden die häufigsten Anwendungsfälle derartiger Kabelführungsvorrichtungen abgedeckt, bei denen beispielsweise bei linear verschieblichen Maschinenteilen ein Längenausgleich erforderlich ist und hierzu die Leitungen beispielsweise in einen U-förmigen Bogen nachgeführt werden. Die Kabelführungsvorrichtung bietet für eine derartige U-förmige Umbiegung dabei eine geeignete Führung.

In zweckdienlicher Weiterbildung ist dabei das Einlegeteil im Querschnitt betrachtet gewölbt nach Art eines Kreisbogenabschnitts ausgebildet. Das Einlegeteil ist daher auf der einen Seite konkav und auf der anderen Seite konvex gebogen. Durch diese Maßnahme ist ein Biegen um die besagte erste Querrichtung nur zu einer Seite hin möglich, nämlich zur konkav gewölbten Seite hin. Durch die konvexe Krümmung an der gegenüberliegenden Seite ist eine Versteifung erzielt. Dadurch wird also insgesamt lediglich eine definierte Biegerichtung zugelassen.

Die Trägerstruktur weist im Querschnitt betrachtet eine U-förmige Querschnittskontur auf mit einer Basis und mit zwei seitlichen U-Schenkeln. Das Einlegeteil ist dabei vorzugsweise ausschließlich in der Basis angeordnet. Zwischen den beiden U-Schenkeln ist dabei vorzugsweise ein Aufnahmeraum für vorzugsweise mehrere Leitungen oder Kabel definiert, in den diese lose eingelegt werden können. Die Basis verschließt daher zu einer Seite den Aufnahmeraum.

Um ein einfaches Biegen, insbesondere um die erste Querrichtung, zu ermöglichen, weisen die U-Schenkel dabei in Längsrichtung betrachtet wiederkehrende Ausnehmungen auf. Diese sind insbesondere als Schlitze ausgebildet, die in den Schenkeln von außen in Richtung zur Basis verlaufend ausgebildet sind. Bei den U-Schenkeln handelt es sich um einstückig an der Basis angeformte Schenkel, die also beim Herstellprozess gleichzeitig mit der insgesamt einstückigen Trägerstruktur ausgebildet werden. Gleiches gilt auch für die Ausnehmungen in den U-Schenkeln. Dadurch ergibt sich insgesamt eine periodische wiederkehrende Struktur. Die Ausnehmungen sind dabei als Einschnitte nur im Bereich des oberen Stirnrands der Schenkel oder auch als komplette Trennräume ausgebildet.

Durch die Ausnehmungen sind vorzugsweise einzelne in Längsrichtung aufeinander folgende Schenkelelemente ausgebildet, die insbesondere periodisch wiederkehrend ausgebildet sind und Stützelemente einer Stützstruktur bilden. Bei der Stützstruktur handelt es sich daher insgesamt um eine zacken- oder zinnenartige Struktur.

Über diese Struktur ist in bevorzugter Weiterbildung eine Biegung erlaubt, bei der die Stützelemente und damit die U-Schenkel zu einer Innenseite der gebogenen Kabelführungseinrichtung gerichtet sind und die Basis die gebogene Außenseite bildet oder zu dieser Außenseite orientiert ist. Im gestreckten, ungebogenen Zustand ist daher zwischen den Stützelementen jeweils ein Freiraum ausgebildet, so dass die Trägerelemente aufeinander zu bewegt werden können.

In bevorzugter Weiterbildung ist dabei ein Biegeradius insoweit begrenzt, als dass bei Erreichen eines minimalen Biegeradius benachbarte Stützelemente mit ihren Flanken aneinander stoßen. Der minimale Biegeradius liegt dabei vorzugsweise in einem Bereich zwischen 5 mm bis 500 mm und bevorzugt im Bereich von 20 mm bis 200 mm.

In Seitenansicht betrachtet verbreitern sich die Stützelemente dabei beispielsweise und weisen eine in etwa dreieckförmige, eine abgerundete dreieckförmige, eine halbkreisförmige, eine zackenförmige oder auch eine trapezförmige Ausgestaltung auf. Gemeinsam ist allen Varianten, dass sich die einzelnen Stützelemente ausgehend von der Basis des U-förmigen Profils nach außen zu dem freien Ende des jeweiligen U-Schenkels verjüngen. Zwischen zwei benachbarten Stützelementen sind die Ausnehmungen ausgebildet.

In bevorzugter Weiterbildung weist die Trägerstruktur in Längsrichtung verlaufende Trennstege auf, die damit separierte Teilräume innerhalb des U-förmigen Querschnittsprofils der Stützstruktur ausbilden. In diese Teilräume wird jeweils vorzugsweise eine Leitung eingelegt, sodass diese separiert nebeneinander innerhalb der Trägerstruktur platzierbar sind.

Diese Trennstege weisen in bevorzugter Ausgestaltung dabei ebenfalls eine Stützstruktur wie die äußeren U-Schenkel auf. Zumindest weisen sie Ausnehmungen auf, um die Biegbarkeit nicht zu beeinträchtigen.

Weiterhin ist vorgesehen, dass an zumindest einem der U-Schenkel Haltebügel für die in der Trägerstruktur einliegenden Leitungen angeformt sind. An den beiden gegenüberliegenden U-Schenkeln sind jeweils Haltebügel-Teilstücke angeformt, die gemeinsam den Aufnahmeraum überdecken und insbesondere miteinander verbindbar sind. Der Aufnahmeraum ist über den zumindest einen Haltebügel vorzugsweise reversibel verschließbar, sodass die Leitungen eingelegt oder auch ausgetauscht werden können. Die Haltebügel erstrecken sich quer über den Aufnahmeraum und verhindern somit ein Herausfallen der Leitungen aus dem Aufnahmeraum. Die Haltebügel sind insbesondere an dem oberen Stirnrand der U-Schenkel angeformt und beispielsweise mit diesem biegeelastisch verbunden, sodass sie zum Einlegen der Leitungen weggebogen werden können. Die Verbindung mit den U-Schenkeln erfolgt beispielsweise über ein Filmscharnier.

Von besonderer Bedeutung ist - ähnlich wie bei der Stützstruktur und den Ausnehmungen - dass diese Haltebügel einstückige Teile der Trägerstruktur sind, also mit diesen in einem Formgebungsvorgang hergestellt werden. Es handelt sich daher nicht um zusätzliche separate Bauteile. Die Haltebügel sind über die Länge der Trägerstruktur vorzugsweise periodisch wiederkehrend angeordnet, sodass also in regelmäßigen Abständen eine Fixierung der Leitungen über diese Haltebügel erfolgt.

Um eine definierte Biegung lediglich in eine Richtung sicherzustellen, sind in bevorzugter Weiterbildung an der den U-Schenkeln gegenüberliegenden Seite der Basis Sperrelemente ausgebildet, die ein Biegen der Kabelführungsvorrichtung zu dieser Seite der Basis hin begrenzen und insbesondere verhindern. Die Kabelführungsvorrichtung lässt sich daher bevorzugt nur zu einer Seite hin biegen und zwar derart, dass die Schenkel und damit die Stützelemente im gebogenen Zustand zu der gebogenen Innenseite orientiert sind. Demgegenüber sind die Sperrelemente im gebogenen Zustand zur Außenseite der gebogenen Kabelführungsvorrichtung hin orientiert. Insbesondere verhindern die Sperrelemente ein Überbiegen in die entgegengesetzte Richtung über eine Grundposition hinaus. Diese Grundposition ist insbesondere eine gestreckte Position, bei der sich die Kabelführungsvorrichtung zumindest in einen Teilbereich geradlinig erstreckt. Alternativ kann die Grundposition auch eine (leicht) gebogene Position sein. Die Sperrelemente erlauben daher lediglich ein Rückbiegen in einen Grundzustand, bei der sich die Kabelführungsvorrichtung geradlinig erstreckt. Hierdurch kann auf zusätzliche Stütz-und Führungselemente verzichtet werden, auf die die Kabelführungsvorrichtung ansonsten beispielsweise aufgelegt werden müsste.

Zweckdienlicherweise sind dabei die Sperrelemente vergleichbar zu den Stützelementen ausgebildet, indem ein sich in Längsrichtung erstreckender Steg mit Schlitzen versehen ist. Anders als die Stützelemente verjüngen sich jedoch die Sperrelemente nicht zu einer freien Außenseite des Stegs hin. Vielmehr weisen die einzelnen Sperrelemente eine gleichbleibende Breite auf bzw. verbreitern sich sogar zur der der Basis abgewandten Seite. Die Breite der einzelnen Sperrelemente an der der Basis abgewandten Seite ist dabei derart bemessen, dass sie aneinander zum Anliegen kommen, wenn die Grundposition, insbesondere die gestreckte Position erreicht ist.

Der Steg kann dabei mittig an der Basis angeformt sein. Alternativ besteht auch die Möglichkeit, mehrere Stege auszubilden, so dass auch auf der zweiten Seite der Basis quasi ein U-förmiges Querschnittsprofil ausgebildet ist, so dass zwei Stege Schenkel dieser U-förmigen Querschnittsgeometrie bilden, wie dies auch auf der gegenüberliegenden Seite der Basis durch die U-Schenkel mit den Stützelementen ausgebildet ist. Bei dieser Ausführungsvariante zeigt die Kabelführungsvorrichtung daher insgesamt eine H-förmige Querschnittskontur.

Um die Belastung der einliegenden Leitungen aufgrund einer Bewegung der Leitungen relativ zueinander und relativ zur Trägerstruktur möglichst gering zu halten, ist in zweckdienlicher Weiterbildung vorgesehen, dass die Leitungen in die Trägerstruktur unmittelbar eingebettet sind. Dadurch wird eine Relativbeweglichkeit und damit eine Belastung des jeweiligen Leitungsmantels möglichst vermieden.

Die Aufgabe wird erfindungsgemäß weiterhin gelöst durch ein Verfahren zur Herstellung einer Kabelführungsvorrichtung, wobei im Rahmen eines kontinuierlichen Formgebungsvorgangs eine sich in Längsrichtung erstreckende Trägerstruktur aus einer plastischen Masse ausgeformt wird und bei diesem Formgebungsprozess ein Einlegeteil mit in die Trägerstruktur integriert wird. Von besonderer Bedeutung ist hierbei, dass es sich bei dem Formgebungsvorgang um einen kontinuierlichen Prozess handelt, bei dem also einzelne Längsabschnitte nachfolgend nacheinander ausgebildet werden, um somit die Trägerstruktur quasi als ein Endloselement auszubilden. Bei dem Verfahren handelt es sich daher nicht um ein klassisches Spritzgießen, bei dem in einem diskontinuierlichen einstufigen Verfahren eine gewünschte Form durch Einspritzen einer Formmasse in eine Werkzeugform ausgebildet wird.

Von besonderer Bedeutung ist hierbei, dass im Rahmen dieses kontinuierlichen Formgebungsvorgangs auch in Längsrichtung variierende Querschnittsgeometrien ausgebildet werden. Dies betrifft insbesondere die speziellen Ausgestaltungen der beschriebenen U-Schenkel mit den Ausnehmungen und den einzelnen Stützelementen und/oder die Ausgestaltung der Haltebügel. Insoweit unterscheidet sich das Herstellungsverfahren auch von einem klassischen herkömmlichen Extrusionsverfahren, da bei einem solchen das Querschnittsprofil über die Länge identisch ist.

Die Herstellung der Kabelführungsvorrichtung erfolgt dabei auf Grundlage eines Verfahrenskonzepts, wie es unter dem Begriff "Exjection" bekannt ist und welches beispielsweise in der WO 2006/045720 A1 beschrieben ist. Mit diesem Verfahren ist in einem kontinuierlichen Formgebungsvorgang die Herstellung einer in Längsrichtung diskontinuierlichen Geometrie ermöglicht. Hierzu ist eine Spritzgussmaschine mit einer beweglichen, beispielsweise rotierenden oder in Längsrichtung bewegten Kavität kombiniert. Die Kavität wird dabei an einem Anspritzpunkt entlanggeführt. Zusätzlich öffnet und schließt sie sich während des Betriebs fortlaufend, sobald eine ausreichende Verfestigung der eingespritzten Spritzgussmasse erzielt ist. Dadurch werden also diskontinuierliche Geometrien fortlaufend hergestellt. Bei diesem Prozess ist es auch möglich, dass weitere Elemente - ähnlich wie bei einem Extrusionsvorgang - wie beispielsweise Leitungen oder auch das strang- oder bandförmige Einlegeteil - mit einlaufen und somit von der Trägerstruktur ummantelt und darin eingebettet sind.

Ausführungsbeispiele werden nachfolgend anhand der Figuren näher erläutert. Diese zeigen jeweils in teilweise vereinfachten Darstellungen:
- Fig. 1a: Eine Querschnittsdarstellung sowie eine Seitenansicht einer Kabelführungsvorrichtung mit darin einliegenden Leitungen,
- Fig. 1b: eine vergrößerte Darstellung der Querschnittsdarstellung der Kabelführungsvorrichtung gemäß Figur 1a,
- Fig. 2: eine Querschnittsdarstellung der Kabelführungsvorrichtung gemäß einer zweiten Variante,
- Fig. 3: eine Querschnittsdarstellung sowie eine Seitenansicht einer weiteren Ausführungsvariante einer Kabelführungsvorrichtung mit in einer Trägerstruktur eingebetteten Leitungen,
- Fig. 4a, 4b: teilweise ausschnittsweise Seitenansichten auf eine Kabelführungsvorrichtung zur Illustration von unterschiedlichen Stützstrukturen,
- Fig. 5: eine Querschnittsdarstellung einer Kabelführungsvorrichtung einer weiteren Ausführungsvariante, bei der durch Trennstege mehrere Teilräume ausgebildet sind,
- Fig. 6a: eine Querschnittsdarstellung der Kabelführungsvorrichtung gemäß der Ausführungsvariante wie sie in den Figuren 1a, 1b dargestellt ist sowie
- Fig. 6b: eine Aufsicht auf die Kabelführungsvorrichtung,
- Fig. 6c: eine vergrößerte Darstellung des mit einem oval in Figur 6b gekennzeichneten Bereichs,
- Fig. 7: eine Querschnittsdarstellung einer Kabelführungsvorrichtung einer weiteren, nicht vom Anspruch 1 umfassten Ausführungsvariante, welche eine Biegung in mehrere Biegerichtungen erlaubt sowie
- FIG 8: eine Seitendarstellung einer weiteren Ausführungsvariante, bei der zusätzliche Sperrelemente ausgebildet sind.

In den Figuren sind gleichwirkende Teile mit den gleichen Bezugszeichen versehen.

Die in den Figuren dargestellten unterschiedlichen Ausführungsvarianten einer Kabelführungsvorrichtung 2 dienen allgemein zur Führung von zumindest einer, vorzugsweise mehrerer Leitungen 4, welche zwei relativ zueinander bewegbare Maschinenteile (hier nicht näher dargestellt) verbinden. Die Maschinenteile führen im Betrieb eine Vielzahl von Relativbewegungen zueinander aus, so dass die Kabelführungsvorrichtung 2 insgesamt hohen Biegewechselbeanspruchungen unterliegt. Die Kabelführungsvorrichtung 2 ist dabei insbesondere für mehrere tausend Biegewechselbeanspruchungen ausgelegt.

Die Leitungen 4 sind üblicherweise als strangförmige Elemente ausgebildet, die in Längsrichtung 8 in der Kabelführungsvorrichtung 2 geführt sind. Bei den Leitungen handelt es sich insbesondere um elektrischen Daten- oder Versorgungsleitungen, die üblicherweise einen Kabelmantel aufweisen, in dem zumindest ein oder auch vorzugsweise mehrere elektrische Leiter oder auch Adern geführt sind. Alternativ können auch sonstige Versorgungsleitungen wie beispielsweise Hydraulik- oder Pneumatikleitungen geführt sein. Vorzugsweise handelt es sich bei den Leitungen 4 jedoch ausschließlich um elektrische Leitungen.

Weiterhin ist in allen Ausführungsvarianten der Kabelführungsvorrichtung 2 gemeinsam, dass diese eine aus einem Kunststoff bestehende Trägerstruktur 6 aufweist, die in einer Längsrichtung 8 verlaufend als kontinuierliches, einstückiges Formgebungselement ausgebildet ist, welches in einem kontinuierlichen Formgebungsverfahren nach Art eines Endlos-Elements, also als sogenannte Meterware hergestellt ist.

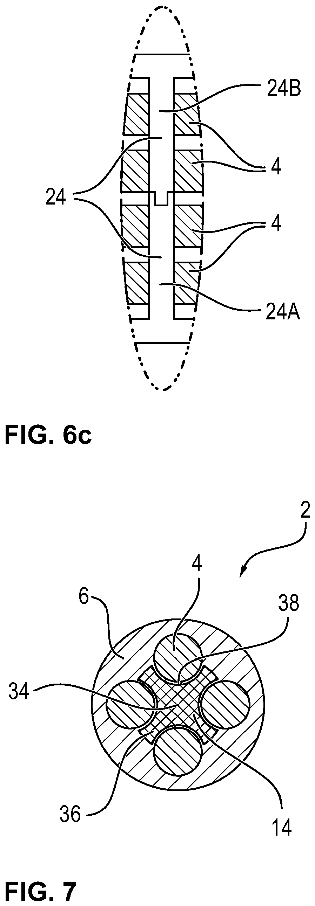

Die Trägerstruktur 6 erstreckt sich in einer ersten Querrichtung 10, welche also quasi eine Breite definiert und in einer zweiten Querrichtung 12, welche eine Höhe definiert. Bis auf die Ausführungsvariante der Figur 7 weist die Trägerstruktur insgesamt eine rechteckförmige Querschnittskontur auf, im Ausführungsbeispiel der Figur 7 eine kreisrunde Querschnittsgeometrie.

Weiterhin ist in allen Ausführungsvarianten gemeinsam, dass in die Trägerstruktur 6 ein Einlegeteil 14 eingebettet ist. Über dieses Einlegeteil erhält die gesamte Kabelführungsvorrichtung 2 eine ausreichende Steifigkeit. Gleichzeitig wird über dieses Einlegeteil ein wiederholtes Biegen der Trägerstruktur ermöglicht. Insbesondere wird durch die Geometrie des Einlegeteils zumindest eine vorgegebene definierte Biegerichtung 16 festgelegt.

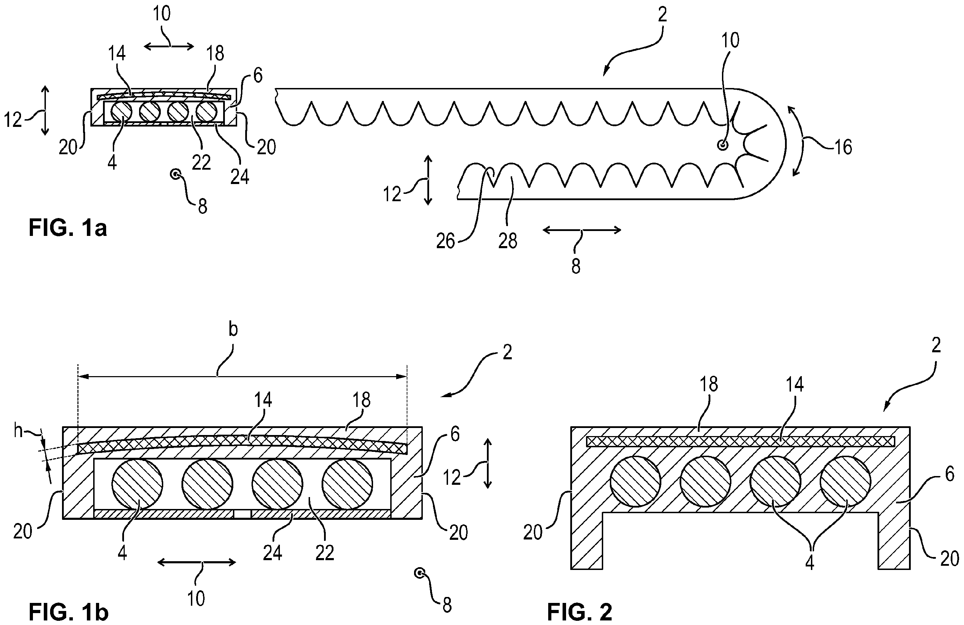

Bei den Ausführungsvarianten gemäß den Figuren 1a und 1b ist die Trägerstruktur 6 im Querschnitt betrachtet in etwa U-förmig ausgebildet und umfasst eine Basis 18, an der randseitig zwei U-Schenkel 20 angeformt sind. Zwischen den beiden U-Schenkeln ist ein freier, also nicht von dem Material der Trägerstruktur 6 angefüllter Aufnahmeraum 22 ausgebildet, in dem die mehreren Leitungen 4 nebeneinander angeordnet verlaufen.

Die Leitungen 4 liegen lose im Aufnahmeraum 22 ein und werden in diesem durch Haltebügel 24 gehalten, welche den Aufnahmeraum 22 überspannen und seitlich an den U-Schenkeln 20 befestigt sind.

Das Einliegeteil 14 ist als ein flaches Band ausgeführt und in die Basis 18 der Trägerstruktur 6 integriert.

Bei der Ausführungsvariante der Figuren 1a, 1b ist das Einlegeteil 14 dabei als ein konkav zum Aufnahmeraum 22 hin gewölbtes Band ausgebildet. Durch diese Wölbung ist lediglich eine Biegung in eine Richtung um die erste Querrichtung 10 ermöglicht. Das Einlegeteil 14 ist daher im Querschnitt betrachtet nach Art eines Kreisringsegments ausgebildet. Es weist eine Breite b auf, welche sich vorzugsweise über die gesamte Breite der Basis 18 erstreckt und bis in die seitlichen U-Schenkel 20 hineinreicht. Weiterhin weist das Einlegeteil 14 eine Höhe h auf, die im Vergleich zur Breite b um ein Vielfaches kleiner ist.

Um eine Biegung der Kabelführungsvorrichtung in Biegerichtung 16 um die erste Querrichtung 10 trotz der seitlichen U-Schenkel 20 zu ermöglichen, sind in den U-Schenkeln 20 in Längsrichtung 8 wiederkehrende Ausnehmungen 26 eingebracht. Dadurch ist insgesamt eine Stützstruktur mit periodisch wiederkehrenden Stützelementen 28 ausgebildet, wie insbesondere aus der rechten Bildhälfte der Figur 1a, also der Seitenansicht zu entnehmen ist. Diese rechte Bildhälfte zeigt hierbei in einer Seitenansicht die Kabelführungsvorrichtung 2, die um 180° um die erste Querrichtung 10 gebogen ist, so dass sie zwei gegenläufig verlaufende Teilabschnitte aufweist. Über die Stützelemente 28 ist dabei ein minimaler Biegeradius dadurch festgelegt, dass die Stützelemente 28 bei Erreichen des minimalen Biegeradius mit ihren Seitenflanken aneinander zum Anliegen kommen. Dies ist insbesondere im rechten Bereich der Figur 1a zu erkennen, also im Bereich der 180°-Umbiegung der Kabelführungsvorrichtung.

Bei der Ausführungsvariante der Figur 2 ist wiederum eine U-Trägerstruktur 6 ausgebildet, wobei allerdings nunmehr im Unterschied zu der Ausführungsvarianten der Figuren 1a, 1b die Leitungen 4 unmittelbar in die Trägerstruktur 6 gemeinsam mit dem Einlegeteil 14 eingebettet sind. Die U-Schenkel 20 weisen wiederum - wie zur Figur 1a beschrieben - Ausnehmungen 26 mit Stützelementen 28 auf, um ein Biegen zu ermöglichen. Die U-Schenkel 20 definieren zwar zwischen sich wiederum einen Aufnahmeraum 22, der ist jedoch insofern funktionslos, als er nicht zur Aufnahme von Leitungen 4 vorgesehen ist. Über die U-Schenkel 20 wird vielmehr eine ergänzende geeignete Versteifung der Kabelführungsvorrichtung 2 erzielt, um nur die eine definierte Biegerichtung 16 zu unterstützen.

Das Einlegeteil 14 ist bei der Ausführungsvariante der Figur 2 als ein einfaches, flaches, nicht gewölbtes Band ausgebildet. Alternativ hierzu ist das Einlegeteil 14 ähnlich wie zu den Figuren 1a und 1b beschrieben als Kreisbogensegment ausgebildet.

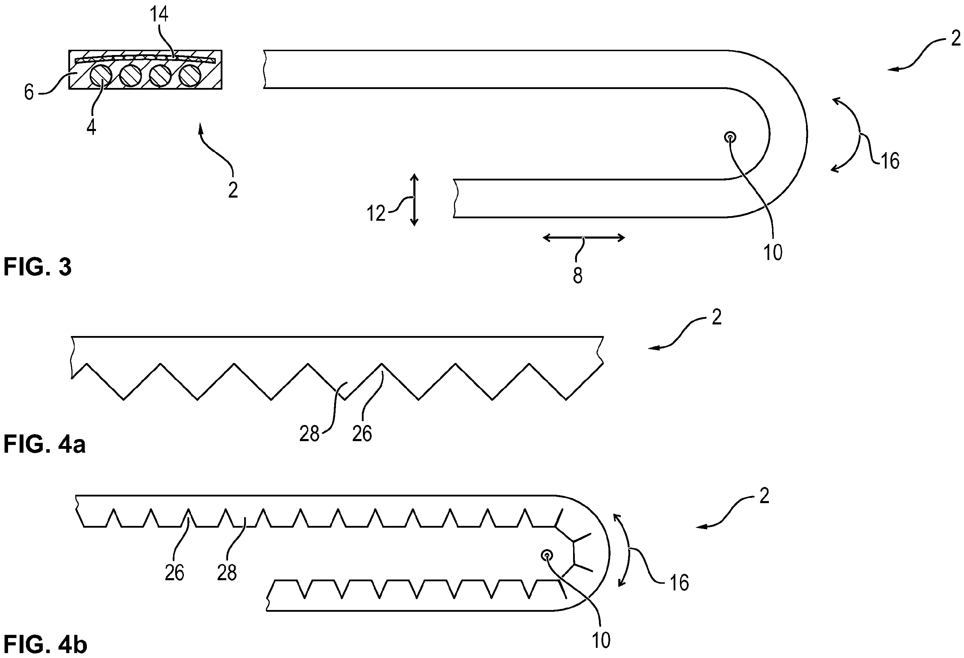

Die Ausführungsvariante gemäß der Figur 3 zeigt eine Ausführungsvariante ähnlich der Figur 2, wobei jedoch im Unterschied zu dieser keine U-Schenkel 20 ausgebildet sind und das Einlegeteil 14 wie zu den Figuren 1a und 1b beschrieben ein Kreisbogensegment ausbildet. Aufgrund der fehlenden U-Schenkel 20 ergibt sich auch eine glatte Seitenkontur, also ohne Ausnehmungen 26 und Stützelemente 28, wie dies in der rechten Bildhälfte der Figur 3 zu erkennen ist. Figur 3 zeigt wie die Figur 1a eine Seitendarstellung einer um 180° gebogenen Kabelführungsvorrichtung 2.

Sowohl bei der Variante der Figur 2 als auch der Figur 3 sind optional zwischen allen oder zumindest einigen der Leitungen 4 Schlitze eingebracht, die vorzugsweise durchgehend und parallel zu den Leitungen 4 verlaufen.

Die in der rechten Bildhälfte der Figur 1a dargestellte Stützstruktur mit den Ausnehmungen 26 und den Stützelementen 28 kann grundsätzlich unterschiedlich ausgebildet sein. Wesentlich ist, dass die Stützelemente 28 zwischen sich zumindest an ihrer der Basis 18 abgewandten Stirnseite eine jeweilige Ausnehmung 26 ausbilden. Vorzugsweise verjüngen sich dabei die Stützelemente 28 zu dieser Randseite hin. Die Stützelemente 28 selbst können dabei unterschiedliche Ausgestaltungen einnehmen. Beispielhaft sind in Figur 4a zacken- oder dreieckförmig ausgebildete Stützelemente 28 dargestellt und in Figur 4b sind diese Stützelemente 28 trapezförmig ausgebildet. Alternativ können sie auch noch als abgerundete Dreiecke oder auch insgesamt als gerundete Elemente, beispielsweise nach Art von Halbkreise ausgebildet sein.

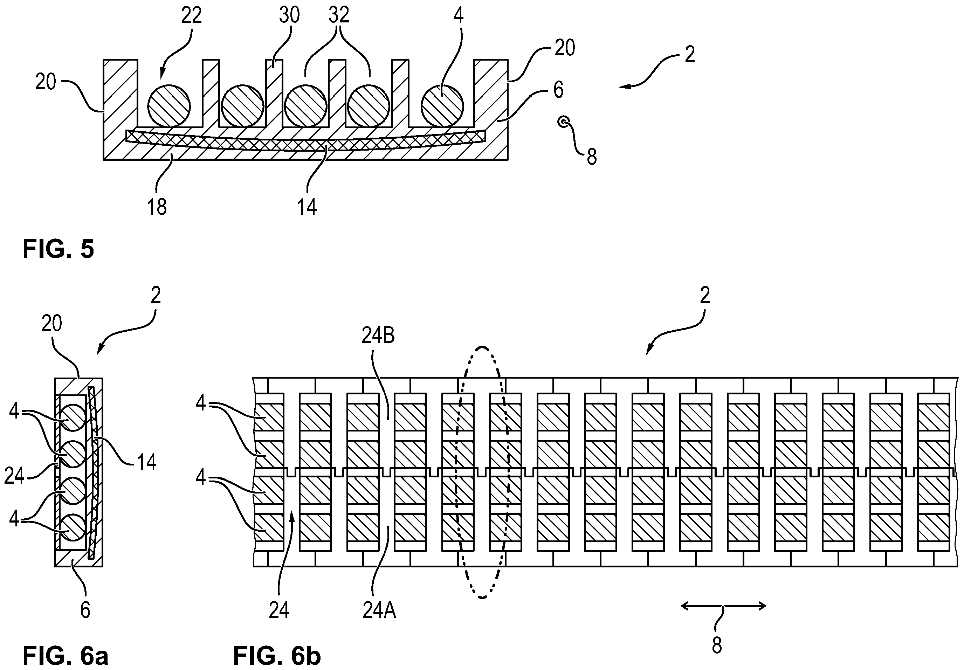

Figur 5 zeigt schließlich eine weitere Ausführungsvariante ausgehend von der gemäß den Figuren 1a und 1b, wobei hier die Trägerstruktur 6 ergänzend noch in Längsrichtung 8 verlaufende Trennstege 30 aufweist, so dass der Aufnahmeraum 22 in mehrere Teilräume 32 unterteilt ist, in die im Ausführungsbeispiel jeweils eine Leitung 4 einliegt.

Im Zusammenhang mit den Figuren 6a, 6b und 6c wird nachfolgend die erfindungsgemässe Ausgestaltung der Haltebügel 24 näher erläutert. Wie insbesondere aus der Aufsicht gemäß den Figuren 6b und 6c zu entnehmen ist, sind in Längsrichtung 8 betrachtet eine Vielzahl von Haltebügeln 24 ausgebildet, welche in periodischen Abständen wiederkehrend angeordnet sind. Die Haltebügel 24 sind dabei jeweils gebildet durch zwei Bügelteile 24A, 24B, die insbesondere als Bügelhälften ausgebildet sind und den Aufnahmeraum 22 jeweils teilweise überdecken. Die beiden Bügelteile 24A, 24B sind mit ihren freien Endbereichen miteinander verbindbar und insbesondere reversibel verschließbar. Die beiden Bügelteile 24A, 24B können daher insbesondere nach außen aufgeklappt werden, um das Einlegen der Leitungen 4 oder auch das Austauschen von Leitungen 4 zu ermöglichen. Wie insbesondere aus der Aufsicht der Figur 6b zu entnehmen sind, zeigen die einzelnen Bügelteile 24A jeweils eine in etwa T-förmige Geometrie, wobei die einzelnen T-Balken der Bügelteile 24A, 24B an den U-Schenkeln 20 angeformt sind und zueinander insbesondere durch Trennschlitze oder Trennkerben abgegrenzt sind.

Bei der Ausführungsvariante der Figur 7 weist die Kabelführungsvorrichtung nunmehr eine kreisrunde Querschnittsgeometrie mit einer kreisrunden Trägerstruktur 6 auf, innerhalb derer entlang einer Mittenlängsachse das Einlegeteil 14 eingebettet ist. Das Einlegeteil 14 ist dabei gebildet durch einen Zentralbereich 34 mit daran angeformten, in etwa radial abstehenden Streben 36. Zwischen den Streben 36 sind dabei jeweils Aufnahmebereiche 38 ausgebildet, in die jeweils eine Leitung 4 eingebettet ist. Der Aufnahmebereich 38 weist dabei jeweils eine konkave Krümmung auf, die insbesondere zumindest in etwa an die Krümmung der Leitung 4 angepasst ist. Insgesamt ist dadurch das Einlegeteil 14 stern- oder kreuzförmig ausgebildet. Durch die Anordnung des Einlegeteils 14 entlang der Mittenachse, also insbesondere entlang einer neutralen Faser, wird bei dieser Ausführungsvariante nunmehr eine mehrdimensionale Biegemöglichkeit ausgebildet, so dass also die gesamte Kabelvorrichtung 2 nicht nur in einer Biegerichtung 16 abgebogen werden kann.

Zweckdienlicherweise ist das Einlegeteil 14 gemäß der Figur 7 in Längsrichtung wendelförmig verlaufend ausgebildet. Bei dieser Ausführungsvariante ist daher der Zentralbereich 34 wendelförmig um die Mittenlängsachse herum verlaufend angeordnet. Alternativ besteht auch die Möglichkeit, dass ausgehend von der in Figur 7 dargestellten Variante der Zentralbereich 34 mit den angeformten Streben 36 lediglich in Längsrichtung 8 um die Mittenachse verdreht ist, so dass die Aufnahmebereiche 38 wendelförmig verlaufen.

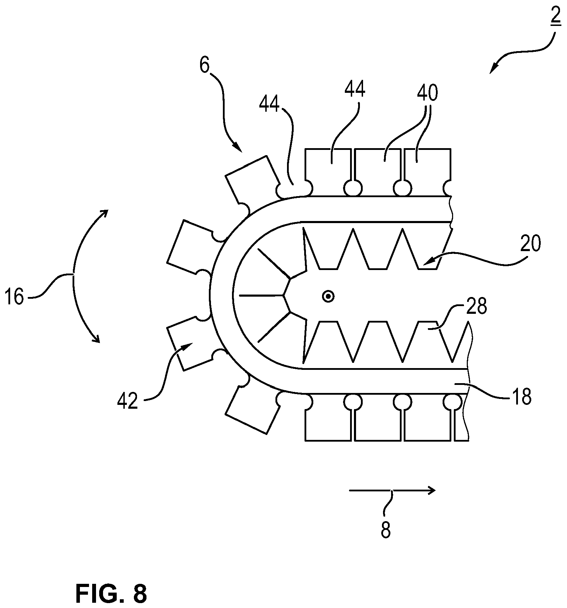

In Fig. 8 ist eine weitere Ausführungsvariante dargestellt, welche auf den zu den Fig. 1 bis 6 beschriebenen Ausführungsvarianten aufbaut und mit jeder dieser Ausführungsvarianten kombiniert werden kann.

Bei der Ausgestaltung gemäß der Fig. 8 sind auf der Rückseite der Basis eine Vielzahl von einzelnen Sperrelementen 40 ausgebildet, welche ein Biegen der Kabelführungsvorrichtung nur in Biegerichtung 16 erlauben und ein Zurückbiegen in die entgegengesetzte Biegerichtung ausschließlich bis zu einer Grundposition, nämlich bis zu einer gestreckten Orientierung der Kabelführungsvorrichtung 2 erlauben. Die einzelnen Sperrelemente 40 sind dabei gebildet durch einen in Längsrichtung 8 verlaufenden Steg 42, in den wiederkehrend Schlitze 44 eingebracht sind. Zweckdienlicherweise sind zwei derartige Stege 42 ausgebildet, die vorzugsweise ebenfalls U-Schenkel ausbilden, wie dies auf der gegenüberliegenden Seite mit den Stützelementen 28 der Fall ist.

Die Sperrelemente 40 sind ebenfalls einstückiges Teil der gesamten Trägerstruktur 6.

Im Unterschied zu den Stützelementen 28, die sich zu ihrer freien Seite hin verjüngen, sind die Sperrelemente 40 im Wesentlichen rechteckförmig ausgebildet. Lediglich an ihrer Verbindungsstelle zur Basis 18 hin ist an einem Fuß der Sperrelemente 40 eine Einschnürung vorgesehen. Dies wird durch einen beispielsweise kreisförmigen Durchbruch am Ende des jeweiligen Schlitzes 44 erreicht.

Die Sperrelemente 42 und die Stützelemente 28 weisen vorzugsweise eine vergleichbare Breite an der Basis 18 und/oder eine vergleichbare Höhe senkrecht zur Basis 18 auf.

### Bezugszeichenliste

- 2: Kabelführungsvorrichtung
- 4: Leitung
- 6: Trägerstruktur
- 8: Längsrichtung
- 10: erste Querrichtung
- 12: zweite Querrichtung
- 14: Einlegeteil
- 16: Biegerichtung
- 18: Basis
- 20: U-Schenkel
- 22: Aufnahmeraum
- 24: Haltebügel
- 24A,B: Bügelteil
- 26: Ausnehmung
- 28: Stützelement
- 30: Trennsteg
- 32: Teilraum
- 34: Zentralbereich
- 36: Strebe
- 38: Aufnahmebereich
- 40: Sperrelement
- 42: Steg
- 44: Schlitz

- b: Breite
- h: Höhe

## Patentansprüche

1. Kabelführungsvorrichtung (2) für zumindest eine Leitung (4) eines bewegten Maschinenteils, die in zumindest einer definierten Biegerichtung (16) reversibel biegbar ist und hierzu eine biegeflexible und sich in einer Längsrichtung (8) ersteckende Trägerstruktur (6) aus Kunststoff aufweist, in die ein Einlegeteil (14) eingebettet ist, wobei das Einlegeteil (14) in einem Querschnitt betrachtet vollumfänglich von Material der Trägerstruktur (6) umgeben ist und das eine Einlegeteil (14) eine definierte, von einer kreisform abweichende Querschnittsgeometrie aufweist, wobei die Trägerstruktur (6) eine U-förmige Querschnittskontur aufweist mit einer Basis (18) und zwei seitlichen U-Schenkeln (20), wobei das Einlegeteil (14) in der Basis (18) angeordnet ist und die beiden U-Schenkel (20) zwischen sich einen Aufnahmeraum (22) definieren, wobei an den U-Schenkeln (20) wiederkehrend Haltebügel (24) für in der Trägerstruktur (6) einliegende Leitungen (4) an den U-Schenkel (20) unmittelbar angeformt sind
**dadurch gekennzeichnet,**
**dass** an den gegenüberliegenden U-Schenkeln jeweils Bügelteile (24A, 24B) angeformt sind, die gemeinsam den Aufnahmeraum überdecken und dass die Bügelteile (24A, 24B) jeweils eine T-förmige Geometrie aufweisen, wobei die einzelnen T-Balken der Bügelteile (24A, 24B) an den U-Schenkeln (20) angeformt sind und zueinander durch Trennschlitze oder Trennkerben abgegrenzt sind.

2. Kabelführungsvorrichtung (2) nach Anspruch 1,
**dadurch gekennzeichnet,**
**dass** das Einlegeteil (14) eine flache Querschnittsgeometrie aufweist, so dass eine Breite (b) des Einlegeteils (14) in einer ersten Querrichtung (10) größer ist als eine Höhe (h) des Einlegeteils (14) in einer zweiten Querrichtung (12) und ein Biegen nur um die erste Querrichtung (10) ermöglicht ist.

3. Kabelführungsvorrichtung (2) nach Anspruch 2,
**dadurch gekennzeichnet,**
**dass** das Einlegeteil (14) im Querschnitt betrachtet gewölbt nach Art eines Kreisbogenabschnitts ausgebildet ist, so dass ein Biegen um die erste Querrichtung (10) nur zu einer Seite ermöglicht ist.

4. Kabelführungsvorrichtung (2) nach einem der vorhergehenden Ansprüche ,
**dadurch gekennzeichnet,**
**dass** die U-Schenkel (20) in Längsrichtung (8) wiederkehrende Ausnehmungen (26) aufweisen und dass durch die Ausnehmungen (26) eine Stützstruktur aus periodisch wiederkehrenden Stützelementen (28) ausgebildet ist, welche einen Biegeradius begrenzt, indem bei Erreichen eines minimalen Biegeradius benachbarte Stützelemente (28) aneinander anstoßen.

5. Kabelführungsvorrichtung (2) nach einem der vorhergehenden Ansprüche ,
**dadurch gekennzeichnet,**
**dass** die beiden Bügelteile (24A, 24B) miteinander verbindbar sind.

6. Kabelführungsvorrichtung (2) nach einem der vorhergehenden Ansprüche ,
**dadurch gekennzeichnet,**
**dass** an der den U-Schenkeln (20) gegenüberliegenden Seite der Basis (18) Sperrelemente (40) ausgebildet sind, welche ein Biegen der Kabelführungsvorrichtung (2) zur gegenüberliegenden Seite der Basis (18) zumindest begrenzen und vorzugsweise verhindern.

7. Kabelführungsvorrichtung (2) nach dem vorhergehenden Anspruch
**dadurch gekennzeichnet,**
**dass** die Sperrelemente (40) durch zumindest einen geschlitzten und an der Basis (18) angeformten Steg (42) ausgebildet sind.

8. Kabelführungsvorrichtung (2) nach einem der vorhergehenden Ansprüche,
**dadurch gekennzeichnet,**
**dass** sie mit Hilfe eines kontinuierlichen Formgebungsvorgangs als einstückiges Bauteil mit in Längsrichtung (8) variierender Querschnittsgeometrie ausgebildet ist.

9. Kabelführungsvorrichtung (2) nach einem der vorhergehenden Ansprüche,
**dadurch gekennzeichnet,**
**dass** in Längsrichtung (8) verlaufende Trennstege (30) in die Trägerstruktur (6) eingebracht sind.

10. Kabelführungsvorrichtung (2) nach einem der vorhergehenden Ansprüche,
**dadurch gekennzeichnet,**
**dass** die zumindest eine Leitung (4) in der Trägerstruktur (6) eingebettet ist.

11. Verfahren zur Herstellung einer Kabelführungsvorrichtung (2) nach einem der vorhergehenden Ansprüche, bei dem im Rahmen eines kontinuierlichen Formgebungsvorgangs die sich in Längsrichtung (8) erstreckende Trägerstruktur (6) aus einer plastischen Masse ausgebildet und hierbei das Einlegeteil (14) mit in die Trägerstruktur (6) integriert wird, wobei im Rahmen des kontinuierlichen Formgebungsvorgangs in Längsrichtung (8) variierende Querschnittsgeometrien ausgebildet werden.

## Claims

1. Cable routing device (2) for at least one cable (4) of a moving machine part which is bendable in a reversible manner in at least one defined bending direction (16) and to this end comprises a flexurally flexible carrier structure (6), which extends in a longitudinal direction (8), is produced from plastics material and in which an insert part (14) is embedded, wherein the insert part (14), when viewed in cross section, is completely surrounded by material of the carrier structure (6) and the one insert part (14) comprises a defined, cross sectional geometry which deviates from a circular form, wherein the carrier structure (6) comprises a U-shaped cross sectional contour with a base (18) and two lateral U legs (20), wherein the insert part (14) is arranged in the base (18) and the two U legs (20) define between them a receiving chamber (22), wherein holding brackets (24), recurring on the U legs (20), for cables (4) enclosed in the support structure (6) are integrally formed directly on the U legs (20),
**characterized in that** bracket parts (24A, 24B) are integrally formed in each case on the opposite U legs and together cover over the receiving chamber, and **in that** the bracket parts (24A, 24B) each comprise a T-shaped geometry, wherein the individual T bars of the bracket parts (24A, 24B) are integrally formed on the U legs (20) and are delimited from one another by separating slits or separating notches.

2. Cable routing device (2) according to Claim 1, **characterized in that** the insert part (14) comprises a flat cross sectional geometry such that a width (b) of the insert part (14) is greater in a first transverse direction (10) than a height (h) of the insert part (14) in a second transverse direction (12) and bending is only possible about the first transverse direction (10) .

3. Cable routing device (2) according to Claim 2, **characterized in that** the insert part (14), when viewed in cross section, is realized in an arched manner in the manner of a portion of a circular arc such that bending about the first transverse direction (10) is only possible to one side.

4. The cable routing device (2) as claimed in one of the preceding claims, **characterized in that** the U legs (20) comprise recesses (26) which recur in the longitudinal direction (8) and **in that** as a result of the recesses (26) a support structure produced from intermittently recurring support elements (28) is realized which defines a bending radius by adjacent support elements (28) striking against one another when a minimum bending radius is achieved.

5. The cable routing device (2) as claimed in one of the preceding claims, **characterized in that** the two bracket parts (24A, 24B) are connectable together.

6. The cable routing device (2) as claimed in one of the preceding claims, **characterized in that** blocking elements (40), which at least restrict and preferably prevent a bending of the cable routing device (2) in relation to the opposite side of the base (18), are realized on the side of the base (18) located opposite the U legs (20).

7. The cable routing device (2) as claimed in the preceding claim, **characterized in that** the blocking elements (40) are realized by at least
one slotted web (42) which is integrally formed on the base (18).

8. The cable routing device (2) as claimed in one of the preceding claims, **characterized in that** said cable routing device is realized as an integral component with a cross sectional geometry which varies in the longitudinal direction (8) by means of a continuous shaping operation.

9. The cable routing device (2) as claimed in one of the preceding claims, **characterized in that** separating webs (30) which extend in the longitudinal direction (8) are introduced into the carrier structure (6).

10. The cable routing device (2) as claimed in one of the preceding claims, **characterized in that** the at least one cable (4) is embedded in the carrier structure (6).

11. Method for producing a cable routing device (2) as claimed in one of the preceding claims, where within the framework of a continuous shaping operation the carrier structure (6), extending in the longitudinal direction (8), is realized from a plastic compound and in this connection the insert part (14) is at the same time incorporated into the carrier structure (6), wherein cross sectional geometries which vary in the longitudinal direction (8) are realized within the framework of the continuous shaping operation.

## Revendications

1. Dispositif de guidage de câble (2) pour au moins une conduite (4) d'une pièce de machine mobile, qui est flexible de manière réversible dans au moins une direction de flexion (16) définie et qui comporte à cette fin une structure porteuse (6) en matière plastique souple en flexion et s'étendant dans une direction longitudinale (8) dans laquelle est incorporée une pièce d'insertion (14), considérée dans une coupe transversale, la pièce d'insertion (14) étant enrobée sur sa pleine périphérie de matière de la structure porteuse (6) et l'une pièce d'insertion (14) présentant une géométrie de section transversale définie, différente d'une forme circulaire, la structure porteuse (6) comportant un contour de section transversale en forme de U, pourvu d'une base (18) et de deux branches latérales du U (20), la pièce d'insertion (14) étant placée dans la base (18) et les deux branches du U (20) définissant entre elles un espace de logement (22), sur les branches du U (20), des étriers de retenue (24) étant directement surmoulés de manière récurrente sur les branches du U (20) pour des conduites (4) insérées dans la structure porteuse (6),
**caractérisé en ce que**
sur les branches en vis-à-vis du U sont respectivement surmoulées des parties d'étrier (24A, 24B), qui conjointement recouvrent l'espace de logement et **en ce que** les parties d'étrier (24A, 24B) présentent respectivement une géométrie en forme de T, les barres individuelles du T des parties d'étrier (24A, 24B) étant surmoulées sur les branches du U (20) et étant délimitées entre elles par des fentes séparatrices ou des encoches séparatrices.

2. Dispositif de guidage de câble (2) selon la revendication 1,
**caractérisé en ce que**
la pièce d'insertion (14) présente une géométrie de section transversale plate, de telle sorte qu'une largeur (b) de la pièce d'insertion (14) dans une première direction transversale (10) soit supérieure à une hauteur (h) de la pièce d'insertion (14) dans une deuxième direction transversale (12) et que seule une flexion autour de la première direction transversale (10) soit possible.

3. Dispositif de guidage de câble (2) selon la revendication 2,
**caractérisé en ce que**
considérée dans la section transversale, la pièce d'insertion (14) est conçue de forme bombée, à la manière d'un segment d'arc de cercle, de sorte qu'une flexion autour de la première section transversale (10) ne soit possible que vers un côté.

4. Dispositif de guidage de câble (2) selon l'une quelconque des revendications précédentes,
**caractérisé en ce que**
les branches du U (20) comportent dans la direction longitudinale (8) des évidements (26) récurrents et **en ce que** par les évidements (26) est réalisée une structure d'appui constituée d'éléments d'appui (28) périodiquement récurrents, lesquels délimitent un rayon de courbure **en ce qu'**à l'atteinte d'un rayon de courbure minimum, des éléments d'appui (28) voisins viennent buter l'un contre l'autre.

5. Dispositif de guidage de câble (2) selon l'une quelconque des revendications précédentes,
**caractérisé en ce que**
les deux parties d'étrier (24A, 24B) sont susceptibles d'être assemblées l'une avec l'autre.

6. Dispositif de guidage de câble (2) selon l'une quelconque des revendications précédentes,
**caractérisé en ce que**
sur le côté de la base (18) qui est en vis-à-vis des branches du U (20) sont conçus des éléments de blocage (40), lesquels limitent pour le moins et empêchent de préférence une flexion du dispositif de guidage de câble (2) vers le côté opposé de la base (18).

7. Dispositif de guidage de câble (2) selon la revendication précédente,
**caractérisé en ce que**
les éléments de blocage (40) sont conçus par au moins une barrette (42) fendue et surmoulée sur la base (18).

8. Dispositif de guidage de câble (2) selon l'une quelconque des revendications précédentes,
**caractérisé en ce que**
le dispositif est conçu à l'aide d'un processus de façonnage continu en tant qu'un composant en monobloc, présentant une géométrie de section transversale variable dans la direction longitudinale (8).

9. Dispositif de guidage de câble (2) selon l'une quelconque des revendications précédentes,
**caractérisé en ce que**
des barrettes séparatrices (30) s'écoulant dans la direction longitudinale (8) sont ménagées dans la structure porteuse (6).

10. Dispositif de guidage de câble (2) selon l'une quelconque des revendications précédentes,
**caractérisé en ce que**
l'au moins une conduite (4) est incorporée dans la structure porteuse (6).

11. Procédé, destiné à fabriquer un dispositif de guidage de câble (2) selon l'une quelconque des revendications précédentes, lors duquel dans le cadre d'un processus de façonnage continu, on conçoit la structure porteuse (6) s'étendant dans la direction longitudinale (8) en une masse plastique et en ce qu'à cet effet, on intègre conjointement la pièce d'insertion (14) dans la structure porteuse (6), dans le cadre du processus de façonnage continu, des géométries de section transversale variables dans la direction longitudinale (8) étant conçues.
